# EUROPÄISCHE PATENTANMELDUNG

(11) **EP 4 462 529 A1**
(43) Veröffentlichungstag der Anmeldung: **13.11.2024**
(21) Anmeldenummer: 23172207.5
(22) Anmeldetag: 09.05.2023
(51) Int. Cl.: H01M 10/04, H01M 50/249

(54) **FERTIGUNGSLINIE ZUR HERSTELLUNG VON BATTERIEGEHÄUSETEILEN SOWIE VERFAHREN ZUR HERSTELLUNG VON BATTERIEGEHÄUSETEILEN**

(71) Anmelder: Nemak, S.A.B. de C.V., 66017 García, Nuevo León (MX)
(72) Erfinder: Marsch, Stefan, 51491 Overath (DE); Wickert, Christopher, 65934 Frankfurt am Main (DE)
(74) Vertreter: Cohausz & Florack

(57) **Zusammenfassung**

Die Erfindung betriff eine Fertigungslinie zur Herstellung von Batteriegehäuseteilen (4), insbesondere Batteriewannen, für elektrisch angetriebene Fahrzeuge, umfassend: zumindest eine Speicherstation (6) zur Lagerung von Batteriegehäuseaufnahmen (12) und von Rahmen (14) für das herzustellende Batteriegehäuseteil (4); zumindest eine Verbindungsstation (26) zur stoffschlüssigen Verbindung der Batteriegehäuseaufnahmen (12) mit den Rahmen (14) mittels eines Schaummaterials (32) und/oder eines Klebstoffs (18); vorzugsweise zumindest einem Zwischenspeicher (36) zur Lagerung der mit einem Rahmen (14) verbundenen Batteriegehäuseaufnahmen (12); zumindest eine Speichereinheit (56) zur Lagerung von Bodenplatten (58) für die herzustellenden Batteriegehäuseteile (4); zumindest eine Fügestation (54) zur stoffschlüssigen Verbindung von Batteriegehäuseaufnahmen (12), insbesondere von mit Rahmen (14) verbundenen Batteriegehäuseaufnahmen (14), mit Bodenplatten (58) mittels mindestens eines Schaummaterials (42) und/oder mindestens eines Klebstoffs (40); und zumindest ein Speicherlager (56, 62) zur Lagerung der Batteriegehäuseteile (4).

## Beschreibung

Die vorliegende Erfindung betrifft eine Fertigungslinie zur Herstellung von Batteriegehäuseteilen, insbesondere Batteriewannen, für elektrisch angetriebene Fahrzeuge umfassen: zumindest eine Speicherstation zur Lagerung von Batteriegehäuseaufnahmen und von Rahmen für das herzustellende Batteriegehäuseteil; zumindest eine Verbindungsstation zur stoffschlüssigen Verbindung der Batteriegehäuseaufnahmen mit den Rahmen mittels eines Schaummaterials und/oder eines Klebstoffs; vorzugsweise zumindest einem Zwischenspeicher zur Lagerung der mit einem Rahmen verbundenen Batteriegehäuseaufnahmen; zumindest eine Speichereinheit zur Lagerung von Bodenplatten für die herzustellenden Batteriegehäuseteile; zumindest eine Fügestation zur stoffschlüssigen Verbindung von Batteriegehäuseaufnahmen, insbesondere von mit Rahmen verbundenen Batteriegehäuseaufnahmen, mit Bodenplatten mittels mindestens eines Schaummaterials und/oder mindestens eines Klebstoffs; und zumindest ein Speicherlager zur Lagerung der Batteriegehäuseteile. Ferner betrifft die vorliegende Erfindung ein Verfahren zur Herstellung von Batteriegehäuseteilen, insbesondere Batteriewannen, für elektrisch angetriebene Fahrzeuge.

Elektrisch angetriebene Fahrzeuge der hier in Rede stehenden Art führen in der Regel eine Mehrzahl an Batteriemodulen umfassend Batteriezellen mit sich, die als Antriebsenergiespeicher dienen und die für den Fahrbetrieb benötigte elektrische Energie zur Verfügung stellen. Insbesondere handelt es sich bei einem elektrisch angetriebenen Fahrzeug der hier in Rede stehenden Art um ein Elektroauto, welches im Wesentlichen ausschließlich von einem Elektromotor oder mehreren Elektromotoren angetrieben wird. Alternativ kann das vorgenannte Batteriegehäuseteil auch bei einem Hybrid-Fahrzeug eingesetzt werden, welches zusätzlich zu einem Elektromotor noch einen Verbrennungsmotor aufweist.

Im Hinblick auf das Fahrverhalten hat sich eine Platzierung der einzelnen Batteriemodule im Bodenbereich des Fahrzeugs als zielführend herausgestellt. Um dies zu ermöglichen, sind Batteriegehäuseteile vorgeschlagen worden, die im Wesentlichen flach und plattenartig ausgebildet sind. Derartige Batteriegehäuseteile lassen sich im Bodenbereich des Fahrzeugs anordnen und mit der Karosserie des Fahrzeugs verbinden.

Dementsprechend werden erhebliche Anforderungen an Batteriegehäuseteile bzw. Batteriegehäuse gestellt. Batteriegehäuseteile, wie insbesondere eine Batteriewanne, sollen nicht nur die einzelnen Batteriemodule bzw. Batteriezellen tragen, sondern auch für eine ausreichende Sicherheit während des Fahrbetriebs des Fahrzeugs sorgen.

Demnach sollen derartige Batteriegehäuseteile zum einen dynamische Belastungen in ausreichender Weise aufnehmen, andererseits aber auch ein Überhitzen der einzelnen Batteriemodule bzw. der einzelnen Batteriezellen verhindern. Zum Abführen der während des Fahrbetriebs entstehenden Wärme ist es aus dem Stand der Technik bekannt, die in Rede stehenden Batteriegehäuseteile mit einer Kühlvorrichtung zu versehen, die die beim Laden und Entleeren der Batteriemodule bzw. Batteriezellen freiwerdende Wärme zuverlässig abführt.

Mitunter führen in den Batteriegehäuseteilen angeordnete Kühlvorrichtungen jedoch zu aufwändigen Herstellungsprozessen für die einzelnen Batteriegehäuseteile und können auch nachteilige dynamische Eigenschaften während des Fahrbetriebs des Fahrzeugs bedingen.

Vor diesem Hintergrund liegt der vorliegenden Erfindung die Aufgabe zugrunde, ein Fertigungslinie zur Herstellung von Batteriegehäuseteilen sowie ein Verfahren zur Herstellung von Batteriegehäuseteilen anzugeben, welche eine kostengünstige Fertigung von Batteriegehäuseteilen ermöglichen, wobei die Batteriegehäuseteile vorteilhafte mechanische Eigenschaften aufweisen.

Die vorgenannte Aufgabe wird gemäß einem ersten Aspekt der vorliegenden Erfindung bei einer Fertigungslinie zur Herstellung von Batteriegehäuseteilen, insbesondere Batteriewannen, für elektrisch angetriebene Fahrzeuge dadurch gelöst, dass die Fertigungslinie ferner zumindest eine Klimaeinrichtung umfasst, und dass die zumindest eine Klimaeinrichtung Batteriegehäuseaufnahmen, Rahmen und/oder Bodenplatten, vorzugsweise in Abhängigkeit der offenen Zeit und/oder der Aushärtezeit des Schaummaterials und/oder des Klebstoffs, auf einen Prozesstemperaturbereich temperieren.

Durch die vorgenannte Fertigungslinie kann in konstruktiv günstiger Hinsicht eine Fertigungslinie zur Verfügung gestellt werden, die kurze Fertigungszyklen sowie eine vorteilhafte stoffschlüssige Verbindung zwischen den einzelnen Komponenten ermöglicht.

Bei der offenen Zeit des Schaummaterials und/oder des Klebstoffs handelt es sich insbesondere um die Zeitspanne von Beginn des Auftragens des Schaummaterials und/oder des Klebstoffs bis zum Zusammenfügen oder zum Verbinden der Fügeteile. Die Aushärtezeit kennzeichnet insbesondere die Zeit, in welcher sich eine derartige Festigkeit des Schaummaterials und/oder des Klebstoffs einstellt, dass die zu verbindenden Komponenten so miteinander verbunden sind, dass diese handlingsfest sind und ein Handling der Fügepartner ohne eine Verschiebung der Fügepartner relativ zueinander möglich ist.

Es ist bevorzugt, dass die Temperatur der zu fügenden Bauteile der Batteriegehäuseteile, insbesondere die Temperatur der Batteriegehäuseaufnahmen, der Rahmen und/oder der Bodenplatte, und/oder die Temperatur des Schaummaterials und/oder des Klebstoffs, während des Fertigungsprozesses in einem Bereich von 25°C bis 55°C insbesondere in einem Bereich von 27°C bis 50°C liegt. Besonders bevorzugt liegt eine Prozesstemperatur während des Fertigungsverfahrens in einem Bereich von 25°C bis 55°C, insbesondere in einem Bereich von 27°C bis 50°C, wobei es sich bei der Prozesstemperatur insbesondere um die Temperatur der zu fügenden Bauteile, also die Temperatur der Batteriegehäuseaufnahmen, der Rahmen und der Bodenplatte handelt. Bei der Prozesstemperatur kann es sich ebenfalls um die in den jeweiligen Stationen der Fertigungslinie herrschende Temperatur handeln.

Vorzugsweise unterliegt die Prozesstemperatur während des Fertigungsverfahrens nur geringen Schwankungen, insbesondere nur Schwankungen in einem Bereich von 5°C, besonders bevorzugt nur Schwankungen in einem Bereich von 2,5°C, so dass externe Einflüsse während des Fertigungsverfahrens minimiert werden können.

Es ist bevorzugt, dass die zumindest eine Klimaeinrichtung sowohl kühlen als auch heizen kann. Beispielsweise kann durch die Verwendung eines exothermen Schaummaterials eine Kühlung notwendig sein, um den entstehenden Thermohaushalt entsprechend zu regeln und den Prozesstemperaturbereich während des Fertigungsverfahrens einzustellen.

Des Weiteren ist es bevorzugt, dass die einzelnen Stationen der Fertigungslinie auf unterschiedliche Temperaturbereiche temperiert werden. Hierdurch können jeweils unterschiedliche Anforderungen der jeweiligen Stationen berücksichtigt werden.

Bei der Bodenplatte handelt es sich vorzugsweise um ein im Wesentlichen plattenförmiges Teil, insbesondere um ein im Wesentlichen plattenförmiges Blech. Es ist ebenfalls denkbar, dass nur ein Teil der Bodenplatte plattenförmig ausgebildet ist und ein weiterer Bereich der Bodenplatte beispielsweise einen auskragenden Bereich und/oder einen abgewinkelten Bereich aufweist.

Die Batteriegehäuseaufnahme dient insbesondere dazu, dass zumindest eine Batteriezelle und/oder zumindest ein Batteriemodul zumindest teilweise in oder auf der Batteriegehäuseaufnahme angeordnet werden können. Dabei kann die zumindest eine Batteriezelle und/oder das zumindest eine Batteriemodul sowohl unmittelbar als auch mittelbar auf oder in der Batteriegehäuseaufnahme angeordnet sein.

Die Batteriegehäuseaufnahme weist einen im Wesentlichen plattenförmigen Bodenabschnitt auf, auf welchem die zumindest eine Batteriezelle und/oder das zumindest eine Batteriemodul mittelbar oder unmittelbar angeordnet sein können. Der plattenförmige Bodenabschnitt kann beispielsweise in Form eines im Wesentlichen plattenförmigen Blechs zur Verfügung gestellt werden. Der plattenförmige Bodenabschnitt kann allerdings auch Prägungen und/oder abgewinkelte Bereiche aufweisen.

Vorzugsweise ist eine Mehrzahl an Kanälen, insbesondere an Kühlkanälen, an der Oberfläche des plattenförmigen Bodenabschnitts angeordnet. Derartige Kanäle können durch geprägte und/oder gestanzte Bleche bzw. Blechteile gebildet werden. Des Weiteren ist es bevorzugt, dass die geprägten und/oder gestanzten Bleche bzw. Blechteile mit dem plattenförmigen Bodenabschnitt der Batteriegehäuseaufnahme gelötet, insbesondere ofengelötet, sind. Dies ermöglicht eine zuverlässige Verbindung sowie eine zuverlässige Abdichtung zwischen der Mehrzahl an Kanälen und dem im Wesentlichen plattenförmigen Bodenabschnitt der Batteriegehäuseaufnahme, wobei zudem der im Wesentlichen plattenförmige Bodenabschnitt mit der Mehrzahl der Kanäle an einer Oberfläche kostengünstig zur Verfügung gestellt werden kann.

Weiter ist es bevorzugt, dass die Mehrzahl an Kanälen sich im Wesentlichen über eine gesamte plattenförmige Oberfläche des plattenförmigen Bodenabschnitts erstrecken. Alternativ ist es ebenfalls möglich, dass sich die Mehrzahl an Kanälen nur über bestimmte Bereiche der Oberfläche des plattenförmigen Bodenabschnitts erstreckt. Vorzugsweise ist die Mehrzahl der Kanäle an einer im Wesentlichen flachen und/oder plattenförmigen Oberfläche des plattenförmigen Bodenabschnitts der Batteriegehäuseaufnahme angeordnet, insbesondere mit dieser verlötet.

Eine weitere bevorzugte Ausgestaltung ist dadurch gekennzeichnet, dass die mindestens eine Klimaeinrichtung die Batteriegehäuseaufnahme, Rahmen und/oder Bodenplatten innerhalb der gesamten Fertigungslinie oder während des gesamten Fertigungsprozesses in einem Prozesstemperaturbereich zwischen 25°C und 55°C, insbesondere zwischen 27,5°C und 50°C, besonders bevorzugt zwischen 30°C und 45°C, hält. Derartige Prozesstemperaturbereiche haben sich insbesondere im Hinblick auf geringe Taktzeiten als vorteilhaft erwiesen, wobei dennoch eine ausreichende Festigkeit der stoffschlüssigen Verbindungen der zu fügenden Bauteile realisiert werden kann.

Bei einer weiteren bevorzugten Ausgestaltung ist die Fertigungslinie zumindest teilweise von mindestens einem Gehäuse eingefasst, wobei die Temperatur innerhalb des mindestens einen Gehäuses auf den Prozesstemperaturbereich eingestellt wird. Hierdurch kann in konstruktiv besonders simpler Weise eine konstante Temperatur innerhalb des von dem Gehäuse eingefassten Bereichs der Fertigungslinie ermöglicht werden. In diesem Zusammenhang ist es weiter bevorzugt, dass innerhalb des von dem Gehäuse eingefassten Bereichs ein Prozesstemperaturbereich zwischen 25°C und 35°C eingestellt wird.

Eine weitere bevorzugte Ausgestaltung ist dadurch gekennzeichnet, dass die zumindest eine Speicherstation, der zumindest eine Zwischenspeicher und/oder das zumindest eine Speicherlager mittels Speicherklimaelementen auf eine Lagertemperatur in einem Bereich von 25°C bis 50°C, insbesondere in einem Bereich von 30°C bis 45°C, temperiert werden. Hierdurch wird es ermöglicht, bereits temperierte Bauteile in den Speichern zur Verfügung zu stellen und so die offene Zeit und/oder die Aushärtezeit des Schaummaterials und/oder des Klebstoffs zu berücksichtigen. Insbesondere können kürzere Prozesszeiten zur Herstellung eines Batteriegehäuseteils ermöglicht werden, wodurch die Produktivität der Fertigungslinie erhöht werden kann. Vorzugsweise handelt es sich bei der zur Verfügung gestellten Lagertemperatur um eine Temperatur die in einem Lagerbereich der Speicherstation, des Zwischenspeichers und/oder des Speicherlagers herrscht.

Des Weiteren ist es bevorzugt, dass die Speicherstation, der Zwischenspeicher und/oder die Speichereinheit im Wesentlichen turmförmig ausgebildet ist. Vorzugweise können in der Speicherstation und in dem Zwischenspeicher 50 bis 120 Bauteile, insbesondere 80 bis 100 Bauteile, gelagert werden. Vorzugsweise weist der Zwischenspeicher eine Lagerkapazität von 10 bis 30 Bauteilen, insbesondere von 15 bis 25 Bauteilen, auf.

Die Speicherstation weist bei einer bevorzugten Ausgestaltung zumindest zwei Lagerbereiche auf, wobei die Batteriegehäuseaufnahmen in einem ersten Lagerbereich der Speichereinheit lagerbar sind und wobei die Rahmen in einem zweiten Lagerbereich der Speichereinheit lagerbar sind.

Eine weitere bevorzugte Ausgestaltung ist dadurch gekennzeichnet, dass die Fertigungslinie ferner zumindest eine Klebestation umfasst, dass die Klebestation auf die von der Speicherstation zur Verfügung gestellten Batteriegehäuseaufnahmen und/oder die Rahmen zumindest eine Klebenaht aufträgt, dass die Klebestation auf den Prozesstemperaturbereich temperiert ist und dass die Klebestation vorzugsweise den Klebstoff vor Auftragen der zumindest einen Klebenaht temperiert, insbesondere auf eine Temperatur zwischen 25°C und 50°C, besonders bevorzugt auf eine Temperatur zwischen 27,5°C und 35°C.

Durch das Temperieren der Klebestation auf den Prozesstemperaturbereich und/oder ein Temperieren und/oder Erhitzen des Klebstoffs vor Auftragen der zumindest einen Klebenaht kann eine vorteilhafte offene Zeit des Klebstoffs berücksichtigt werden, so dass die zumindest eine Klebenaht eine zuverlässige Adhäsion bzw. Kohäsion bewirken kann. Beispielsweise umfasst die Klebestation zwei Kleberoboter, die jeweils eine Klebenaht auf die von der Speicherstation zur Verfügung gestellten Batteriegehäuseaufnahmen und/oder die Rahmen auftragen. Bevorzugt weist zumindest ein Kleberoboter der Klebestation Klimaelemente, insbesondere Peltier-Heizelemente, zum Temperieren/Erhitzen des Klebstoffs auf.

Eine weitere bevorzugte Ausgestaltung ist dadurch gekennzeichnet, dass die zumindest eine Verbindungsstation als zumindest ein Rotationstisch umfassend eine Mehrzahl an Aufnahmebereichen ausgebildet ist, dass der zumindest eine Rotationstisch zumindest ein Verbindungsstationsklimaelement je Aufnahmebereich aufweist, und dass die Verbindungsstationsklimaelemente eine Temperatur der Batteriegehäuseaufnahmen und/oder der Rahmen auf den Prozesstemperaturbereich, insbesondere auf einen Prozesstemperaturbereich zwischen 40°C und 50°C, temperieren. Vorzugsweise können die Verbindungsstationsklimaelemente auch eine in den Aufnahmebereichen herrschende Temperatur auf den Prozesstemperaturbereich, insbesondere auf einen Prozesstemperaturbereich zwischen 40°C und 50°C, temperieren.

Durch zumindest einen Rotationstisch kann eine Verbindungsstation zur Verfügung gestellt werden, die in konstruktiv simpler Weise Batteriegehäuseaufnahmen und Rahmen miteinander verbindet. Beispielsweise wird zunächst eine Batteriegehäuseaufnahme in einen Aufnahmebereich des Rotationstischs mittels eines Manipulationsroboters gelegt. Anschließend kann die in dem Aufnahmebereich gelagerte Batteriegehäuseaufnahme in eine zweite Position gedreht werden, wobei in dieser zweiten Position ein Rahmen von einem weiteren Manipulationsroboter mit der Batteriegehäuseaufnahme gefügt werden kann. Durch die Temperierung kann ein vorteilhaftes Fügen unter Berücksichtigung des Verhaltens des Klebstoffs ermöglicht werden.

Eine weitere bevorzugte Ausgestaltung ist dadurch gekennzeichnet, dass die Mehrzahl an Aufnahmebereichen jeweils zumindest ein Ausrichtmittel, insbesondere ein Vakuumausrichtmittel, zum Ausrichten der Batteriegehäuseaufnahmen aufweisen, und/oder dass die Mehrzahl an Aufnahmebereichen jeweils zumindest ein Fixiermittel zum Fixieren der Batteriegehäuseaufnahmen aufweisen. Hierdurch wird eine passgenaue Ausrichtung der Batteriegehäuseaufnahmen in den Aufnahmebereichen bzw. eine zuverlässige Fixierung der Batteriegehäuseaufnahmen in den Aufnahmebereichen ermöglicht, so dass die Batteriegehäuseaufnahmen präzise mit den Rahmen verbunden werden können.

Bei einer weiteren Ausgestaltung umfasst die Fertigungslinie ferner zumindest eine Vergussstation, wobei die zumindest eine Vergussstation die mit einem Rahmen verbundenen Batteriegehäuseteile mit einem Schaummaterial und/oder einem Vergussmittel vergießt. Durch die Verwendung des Schaummaterials und/oder des Vergussmittels kann eine vorteilhafte Festigkeit der Verbindung zwischen Batteriegehäuseteilen und Rahmen ermöglicht werden. Zudem kann die Dichtigkeit der Verbindung von Rahmen und Batteriegehäuseteilen erhöht werden. Des Weiteren ist es bevorzugt, dass die zumindest eine Vergussstation die in den Aufnahmebereichen angeordneten und miteinander bereits mittels einer Klebenaht verbundenen Batteriegehäuseteile und Rahmen vergießt.

Des Weiteren ist es bevorzugt, dass das Versieglungsmittel und/oder das Vergussmittel erst dann appliziert wird, wenn der wenigstens eine Rahmen bereits mit der zumindest einen Batteriegehäuseaufnahme verklebt und/oder verspannt wurde. In einem solchen Fall wird der zu versiegelnde oder zu vergießende Fügespalt zunächst vermessen, anschließend die Füllmenge in den einzelnen Bereichen bestimmt und dann das Versieglungsmittel und/oder das Vergussmittel appliziert.

Eine weitere bevorzugte Ausgestaltung ist dadurch gekennzeichnet, dass die Fertigungslinie ferner zumindest eine Klebe- und Schaumstation umfasst, dass die Klebe- und Schaumstation auf die von dem Zwischenspeicher zur Verfügung gestellten mit einem Rahmen verbunden Batteriegehäuseaufnahmen Klebstoff und/oder Schaummaterial aufbringt, und dass die Klebe- und Schaumstation auf die Prozesstemperatur temperiert ist.

Durch das Temperieren der Klebe- und Schaumstation auf den Prozesstemperaturbereich kann eine vorteilhafte offene Zeit des Klebstoffs und/oder des Schaummaterials berücksichtigt werden, so dass eine zuverlässige Adhäsion bzw. Kohäsion bewirkt werden kann. Beispielsweise umfasst die Klebe- und Schaumstation vier Stationen, nämlich eine Ladestation zum Empfangen der von dem Zwischenspeicher zur Verfügung gestellten und mit einem Rahmen verbundenen Batteriegehäuseaufnahmen, eine Klebestation, eine Schaummaterialstation sowie eine Entladestation. Bevorzugt weist zumindest ein Kleberoboter der Klebestation Klimaelemente, insbesondere Peltier-Heizelemente, zum Temperieren/Erhitzen des Klebstoffs auf.

Eine weitere bevorzugte Ausgestaltung ist dadurch gekennzeichnet, dass die Klebe- und Schaumstation den Klebstoff und/oder das Schaummaterial vor dem Aufbringen auf einen Temperaturbereich, insbesondere auf einen Prozesstemperaturbereich, zwischen 25°C und 50°C, besonders bevorzugt zwischen 27,5°C und 35°C, temperiert. Eine solche Temperierung des Klebstoffs und/oder des Schaummaterials hat sich in der Praxis als besonders vorteilhaft hinsichtlich der offenen Zeit bzw. der zur Verfügung gestellten Adhäsion bzw. Kohäsion des Klebstoffs und/oder des Schaummaterials erwiesen. Zudem können hierdurch bevorzugte Taktzeiten der Fertigungslinie ermöglicht werden.

Eine weitere bevorzugte Ausgestaltung ist dadurch gekennzeichnet, dass die Fügestation die mit dem Rahmen verbundenen Batteriegehäuseaufnahmen und die Bodenplatten mittels wenigstens eines Druckkissens, insbesondere mittels wenigstens eines Druckschlauchs, aneinanderdrückt, und dass das wenigstens eine Druckkissen, insbesondere der wenigstens eine Druckschlauch, mit temperierter Luft, insbesondere mit temperierter Druckluft, zur Einstellung des Prozesstemperaturbereichs in der Fügestation beaufschlagbar ist. Indem die Fügestation Batteriegehäuseaufnahmen und Bodenplatten mit mindestens einem Druckkissen mit temperierter Luft stoffschlüssig miteinander verbindet, kann in der Fügestation ein thermischer Haushalt eingestellt werden, der hinsichtlich der offenen Zeit und/oder der Aushärtezeit des Schaummaterials und/oder des Klebstoffes vorteilhaft ist. Insbesondere können hierdurch verringerte Taktzeiten ermöglicht werden.

Durch die Verwendung zumindest eines Druckkissen kann ein im Wesentlichen homogener bzw. gleichflächiger Druck auf die zu verfügenden Bauteile, nämlich die Bodenplatte und die Batteriegehäuseaufnahme zur Verfügung gestellt werden, so dass ein hinreichendes Verfügen gewährleistet wird. Insbesondere kann hierdurch den während des Verfügens auftretenden Drücken, die beispielsweise durch eine Reaktion des Klebstoffes und/oder des Schaummaterials auftreten, entgegengewirkt werden.

Das wenigstens eine Druckkissen kann aus einem flexiblen Vollmaterial, insbesondere einem weichelastischen Material wie z.B. Gummi oder Silikon gebildet sein. Das Druckkissen kann auch ein expandierbares bzw. aufpumpbares Druckkissen, wie beispielsweise ein pneumatisch aufblasbares oder hydraulisch aufweitbares Kissen sein, wobei die Kissenhülle beispielsweise aus Gummi oder Silikon gebildet sein kann. Vorzugsweise kann durch die Verwendung wenigstens eines Druckkissens eine verbesserte Druckverteilung bzw. Kraftverteilung erreicht werden. Des Weiteren ist es bevorzugt, dass das wenigstens eine Druckkissen ein Gewebe aufweist.

Bei einer bevorzugten Ausgestaltung drückt das wenigstens eine Druckkissen die Batteriegehäuseaufnahmen an die Bodenplatten mittelbar über mindestens eine Andrückeinheit an. Eine mittelbare Beaufschlagung mittels zumindest einer Andrückeinheit kann sich dahingehend als vorteilhaft erweisen, dass die Druckverteilung bzw. die Kraftverteilung während des Andrückschritts weiter verbessert wird. Vorzugsweise wird eine mittelbare Beaufschlagung mittels zumindest einer Andrückeinheit durchgeführt. Bei der Andrückeinheit kann es sich beispielsweise um eine Andrückplatte, insbesondere um eine metallische Andrückplatte, handeln.

Bei einer bevorzugten Ausgestaltung ist das wenigstens eine Druckkissen mit einem Druck beaufschlagbar und/oder mit Druckluft befüllbar, wobei der beaufschlagte Druck indikativ für die von dem wenigstens einen Druckkissen ausgeübte Andrückkraft und/oder für den von dem wenigstens einen Druckkissen ausgeübten Andrückdruck ist. Dies ermöglicht ein zuverlässiges Fügen, insbesondere ein zuverlässiges Verkleben, von Bodenplatte und Batteriegehäuseaufnahme. Vorzugsweise ist die Höhe des Drucks zur Beaufschlagung des wenigstens einen Druckkissens regelbar und/oder steuerbar. Dies ermöglicht eine passgenaue Einstellung der ausgeübten Andrückkraft bzw. des ausgeübten Andrückdrucks, so dass ein vorteilhaftes Fügen zwischen Bodenplatte und Batteriegehäuseaufnahme ermöglicht werden kann. Vorteilhafterweise kann der Druck des wenigstens einen Druckkissens während des Fügeschritts aufrechterhalten und/oder verändert werden, so dass ein zuverlässiges Aushärten bzw. Gelieren eines Klebstoffes und/oder eines Schaummaterials über einen gewissen Zeitraum ermöglicht werden kann. Vorzugsweise ist das wenigstens eine Druckkissen dazu ausgelegt, einem Druck von bis zu 18 bar standzuhalten. Insbesondere hat es sich als vorteilhaft erwiesen, einen Druck von bis zu 10 bar, insbesondere von bis zu 6 bar während des Fügeschritts vorzusehen. Durch vorgenannte Drücke können vorteilhafte Zuhaltekräfte zur Verfügung gestellt werden, so dass Druck und/oder Wärmeentwicklungen des Klebstoffes und/oder des Schaummaterials während einer thermoreaktiven Phase des Klebstoffes und/oder des Schaummaterials entgegengewirkt werden kann.

Bei einer weiteren bevorzugten Ausgestaltung ist das wenigstens eine Druckkissen als wenigstens ein Druckschlauch, insbesondere als wenigstens ein Gewebedruckschlauch ausgebildet und/oder der wenigstens eine Gewebedruckschlauch ist mit temperierter Luft, insbesondere temperierter Druckluft, beaufschlagbar oder befüllbar. Vorzugsweise weist der wenigstens eine Druckschlauch eine gewebte, textile Außenhülle und eine gummierte Innenhülle auf. Hierdurch können die Batteriegehäuseaufnahmen und Bodenplatten mit temperierter Druckluft stoffschlüssig in vorteilhafter Weise verbunden werden. Beispielsweise kann ein thermischer Haushalt eingestellt werden, der hinsichtlich der offenen Zeit und/oder der Aushärtezeit des Schaummaterials und/oder des Klebstoffs vorteilhaft ist. Insbesondere können hierdurch verringerte Taktzeiten ermöglicht werden. Vorgenannte Druckschläuche weisen zudem eine hohe Flexibilität, vorteilhafte Verrottungsfestigkeiten und Wartungseigenschaften sowie eine gute Kältefestigkeit auf. Bei den vorgenannten Druckschläuchen kann es sich insbesondere um handelsübliche Feuerwehrschläuche handeln.

Des Weiteren ist es bevorzugt, dass die während des Fügeprozesses in der Fügestation herrschende Temperatur mittels mindestens eines Sensormittels gemessen wird und dass die Menge und/oder die Temperatur der temperierten Luft in Abhängigkeit der von dem mindestens einen Sensormittel gemessenen Temperatur von einem Steuermittel gesteuert wird. Hierdurch kann während des Fügeschritts in zuverlässiger Weise der gewünschte Temperaturbereich, insbesondere der Prozesstemperaturbereich, eingestellt werden.

Vorzugsweise umfasst die Fügestation zumindest eine obere und bewegbare Werkzeughälfte zur Fixierung und zur Manipulation zumindest einer Bodenplatte; zumindest eine untere Werkzeughälfte aufweisend mindestens eine Andrückeinheit sowie wenigstens ein Druckkissen zum Fügen der zumindest einen Bodenplatte und zumindest einer Batteriegehäuseaufnahme; wobei die zumindest eine Batteriegehäuseaufnahme wenigstens einen im Wesentlichen plattenförmigen Bodenabschnitt umfasst und wobei der im Wesentlichen plattenförmige Bodenabschnitt an einer Oberfläche eine Mehrzahl an Kanälen umfasst, wobei die Fügestation ferner zumindest ein Klimamittel umfasst, so dass das wenigstens eine Druckkissen mit temperierter Luft, insbesondere mit temperierter Druckluft, beaufschlagbar oder befüllbar ist.

Es ist bevorzugt, dass die temperierte Luft, insbesondere die temperierte Druckluft, eine Temperatur aufweist, die über der Umgebungstemperatur liegt. Insbesondere weist die temperierte Druckluft eine Temperatur von über 25°C, insbesondere von über 35°C, besonders bevorzugt von über 45°C, auf.

Des Weiteren ist bevorzugt, dass mindestens ein Druckkissen vorgesehen ist, wobei das mindestens eine Druckkissen im Wesentlichen gleichmäßig mit Druckluft, insbesondere mit erwärmter Druckluft, gefüllt und demnach eine gleichmäßige Andrückkraft auf die Batteriegehäuseaufnahme und/oder die Bodenplatte ausübt. Hierdurch können während des Fügeprozesses entstehende Drücke und/oder Wärmeentwicklungen kompensiert werden, die beispielsweise während der thermoreaktiven Phase des Klebstoffes und/oder des Schaummaterials auftreten können. Durch den Betrieb mit erwärmter Druckluft kann die Erwärmung in der unteren Werkzeughälfte kalorisch unterstützt werden.

Vorzugsweise fixiert die obere Werkzeughälfte die Bodenplatte über eine Vakuumeinheit, so dass diese in vorteilhafter Weise ausgerichtet und fixiert werden kann. Zum Verfügen von Bodenplatte und Batteriegehäuseaufnahme kann die obere Werkzeughälfte so lange bewegt, insbesondere hydraulisch verfahren, werden, bis die von der oberen Werkzeughälfte aufgenommene Bodenplatte im Wesentlichen an der Batteriegehäuseaufnahme anliegt. Eine entsprechende Position kann dann beispielsweise mechanisch über Bolzen arretiert werden. Beispielsweise können die Bodenplatte und die mit dem Rahmen verbundene Batteriegehäuseaufnahme auch mittels einer Hydraulik arretiert werden. Die für das weitere Fügeverfahren benötigte Andrückkraft kann dann über das wenigstens eine Druckkissen zur Verfügung gestellt.

Des Weiteren ist es bevorzugt, dass das wenigstens eine Druckkissen mit temperierter Luft befüllt wird, wodurch sich ein Andrückdruck gleichförmig und temperiert aufbauen kann, um dem Druck des Klebstoffs und/oder des Schaummaterials entgegenzuwirken. Durch eine entsprechende Temperierung kann die Zykluszeit des Fügeprozesses reduziert werden und zudem unabhängig von der Umgebungstemperatur im Wesentlichen robuste Parameter des Fügeprozesses ermöglicht werden. Bei der temperierten Luft, insbesondere der temperierten Druckluft, kann es sich beispielsweise um beheizte oder gekühlte Luft handeln. Zudem kann durch die temperierte Luft ein gleichmäßiger Temperaturverlauf im Werkzeug eingestellt werden, wodurch ein Verzug der miteinander zu fügenden Bauteile vermieden werden kann, so dass Fertigungstoleranzen zuverlässig eingehalten werden können.

Vorzugsweise wird die obere Werkzeughälfte beispielsweise mittels zumindest einer Scharnierbefestigung zunächst verschwenkt. Bei Erreichen eines Mindestabstands zwischen zu fügender Bodenplatte und Batteriegehäuseaufnahme wird die obere Werkzeughälfte anschließend im Wesentlichen vertikal und/oder linear bewegt. Insbesondere wird die obere Werkzeughälfte derart bewegt, dass die zumindest eine Bodenplatte und die wenigstens eine Batteriegehäuseaufnahme planparallel aufeinander zu bewegt werden. Hierdurch kann in vorteilhafter Weise ein Scheren der Verbindung zwischen Batteriegehäuseaufnahme, Rahmen und/oder Bodenplatte vermieden werden. Ebenfalls hat sich eine derartige Ausgestaltung dahingehend als vorteilhaft erwiesen, dass die in der Vorrichtung verbleibende Luft minimiert werden kann, so dass der Fügeprozess von Bodenplatte und Batteriegehäuseaufnahme weiter verbessert werden kann. Vorzugsweise liegt der vorgenannte Mindestabstand in einem Bereich von 20 cm bis 40 cm.

Nach der im Wesentlichen vertikalen, linearen und/oder planparallelen Bewegung der oberen Werkzeughälfte wird diese auf einer Arretierung aufgesetzt und/oder mittels einer Arretierung arretiert. Beispielsweise kann es sich um eine hydraulische und/oder eine mechanische Arretierung handeln.

Eine weitere bevorzugte Ausgestaltung ist dadurch gekennzeichnet, dass das Schaummaterial und/oder der Klebstoff ein Mehrkomponentensystem, insbesondere ein Zweikomponentensystem, umfasst bzw. als Mehrkomponentensystem, insbesondere als Zweikomponentensystem, ausgebildet ist. Das Mehrkomponentensystem, insbesondere das Zweikomponentensystem, kann aus zwei verschiedenen Materialien bestehen bzw. zwei verschiedene Materialien umfassen, die in einem bestimmten Verhältnis gemischt werden können, um eine chemische Reaktion auszulösen, die zu einer Aushärtung oder Vernetzung führt.

Beispielsweise kann es sich bei dem Mehrkomponentensystem um eine Harz-Härter-Kombination handeln, wobei der Harz eine flüssige, reaktive Komponente sein kann und der Härter eine feste oder flüssige Komponente sein kann, die eine chemische Reaktion bei Vermischung mit dem Harz auslöst. Harz und Härter sind vorzugsweise so lange chemisch inert und stabil, bis sie gemischt werden. Nach einer Mischung kann das Mehrkomponentensystem dann schnell, robust und zuverlässig aushärten und so die vorgenannten Funktionseigenschaften des Schaummaterials und/oder des Klebstoffs zur Verfügung stellen.

Vorgenannte Aufgabe wir gemäß einem zweiten Aspekt der vorliegenden Erfindung durch ein Verfahren zur Herstellung eines Batteriegehäuseteilen, insbesondere Batteriewannen, für elektrisch angetriebene Fahrzeuge gelöst, wobei das Verfahren folgende Schritte umfasst: Lagerung von Batteriegehäuseaufnahmen, Rahmen und/oder Bodenplatten; stoffschlüssiges Verbinden der Batteriegehäuseaufnahmen, der Rahmen und/oder der Bodenplatten mittels mindestens eines Schaummaterials und/oder mittels mindestens eines Klebstoffs untereinander, Temperieren der der Batteriegehäuseaufnahmen, der Rahmen und/oder der Bodenplatten und/oder temperieren des Schaummaterials und/oder des Klebstoffs auf einen Prozesstemperaturbereich.

Die mit vorgenanntem Verfahren einhergehenden Vorteile sind bereits voranstehend mit Bezug auf die erfindungsgemäße Fertigungslinie erläutert.

Eine Ausgestaltung ist dadurch gekennzeichnet, dass das Tempieren auf einen Prozesstemperaturbereich im Wesentlichen während des gesamten Verfahrens durchgeführt wird, und/oder dass der Prozesstemperaturbereich vorzugsweise in einem Bereich von 25°C bis 55°C, insbesondere in einem Bereich von 27°C bis 50°C, liegt.

Vorzugsweise wird das Verfahren mittels einer Fertigungslinie nach dem ersten Aspekt durchgeführt.

Die oben beschriebenen, zunächst grundsätzlich für sich alleine stehenden Ausführungsformen und beispielhaften Ausgestaltungen aller Aspekte der vorliegenden Erfindung sollen auch in allen Kombinationen miteinander offenbart verstanden werden.

Weitere vorteilhafte beispielhafte Ausgestaltungen der Erfindung sind der folgenden detaillierten Beschreibung einiger beispielhafter Ausführungsformen der vorliegenden Erfindung, insbesondere in Verbindung mit den Figuren zu entnehmen. Die der Anmeldung beiliegenden Figuren sollen jedoch nur dem Zwecke der Verdeutlichung, nicht aber zur Bestimmung des Schutzbereiches der Erfindung dienen. Die beiliegenden Zeichnungen sind nicht notwendigerweise maßstabsgetreu und sollen lediglich das allgemeine Konzept der vorliegenden Erfindung beispielhaft widerspiegeln. Insbesondere sollen Merkmale, die in den Figuren enthalten sind, keineswegs als notwendiger Bestandteil der vorliegenden Erfindung erachtet werden.

Nachfolgend wird die Erfindung anhand von Ausführungsbeispielen zeigenden Zeichnungen näher erläutert. Es zeigen jeweils schematisch:
- Fig. 1: eine schematische Ansicht eines Ausführungsbeispiels einer Fertigungslinie;
- Fig. 2: eine schematische Ansicht eines Ausführungsbeispiels einer Fügestation einer Fertigungslinie sowie eines in der Fügestation angeordneten Ausführungsbeispiels eines Batteriegehäuseteils; sowie
- Fig. 3: eine schematische Ansicht des mittels der Fertigungslinie hergestellten Ausführungsbeispiels des Batteriegehäuseteils.

In der nachfolgenden Beschreibung der verschiedenen erfindungsgemäßen Ausführungsbeispiele werden Bauteile und Elemente mit gleicher Funktion und gleicher Wirkungsweise mit denselben Bezugszeichen versehen, auch wenn die Bauteile und Elemente bei den verschiedenen Ausführungsbeispielen in ihrer Dimension oder Form Unterschiede aufweisen können.

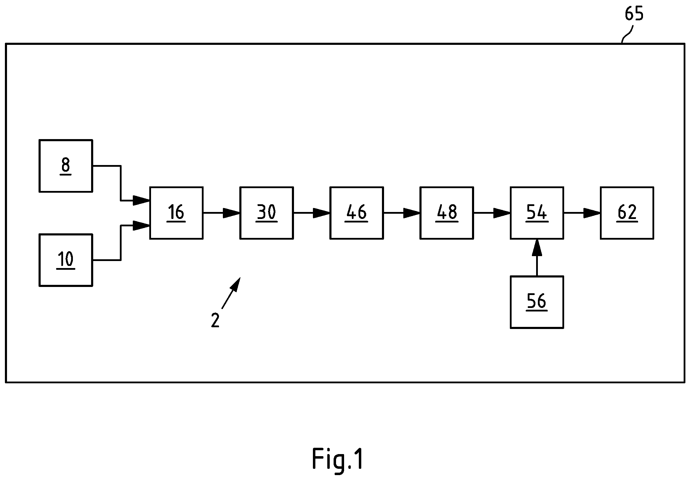

Fig. 1 zeigt ein Ausführungsbeispiel einer Fertigungslinie 2 in einer schematischen Ansicht. Die Fertigungslinie 2 ist zur Herstellung von Batteriegehäuseteilen 4 ausgebildet.

Die Fertigungslinie 2 umfasst eine Speicherstation, welche zwei Lagerbereiche 8 und 10 aufweist. Die zwei Lagerbereiche 8 und 10 sind beispielsweise als Hochregallager ausgebildet.

Der Lagerbereich 8 ist dazu ausgebildet, Batteriegehäuseaufnahmen 12 aufzunehmen. Vorzugsweise weist der Lagerbereich 8 zumindest ein Klimaelement zur Temperierung des Lagerbereichs 8 auf einen Prozesstemperaturbereich auf. Insbesondere ist der Lagerbereich 8 im Betrieb der Fertigungslinie 2 auf einen Temperaturbereich zwischen 30°C und 45°C temperiert.

Der Lagerbereich 10 ist dazu ausgebildet, Rahmen 14 für die herzustellenden Batteriegehäuseteile 4 zu lagern. Vorzugsweise weist der Lagerbereich 10 zumindest ein Klimaelement zur Temperierung des Lagerbereichs 10 auf einen Prozesstemperaturbereich auf. Insbesondere ist der Lagerbereich 10 im Betrieb der Fertigungslinie 2 auf einen Temperaturbereich zwischen 30°C und 45°C temperiert.

Die Fertigungslinie 2 weist ferner eine mit dem Lagerbereich 10 verbundene Klebestation 16 auf, wobei die Klebestation 16 auf die von dem Lagerbereich 10 zur Verfügung gestellten Rahmen 14 Klebenähte 18 aufträgt. Hierzu sind der Lagerbereich 10 und die Klebestation 16 beispielsweise mittels eines Förderbandes miteinander verbunden. Beispielsweise können auch mehrere Klebestationen 16 vorgesehen sein, so dass an unterschiedlichen Positionen des Rahmens 14 Klebenähte 18 aufgebracht werden können.

Vorzugsweise ist die Klebestation 16 auf den Prozesstemperaturbereich temperiert und/oder der Klebstoff ist auf eine Temperatur bzw. auf einen Temperaturbereich temperiert.

Die von dem Lagerbereich 8 zur Verfügung gestellten Batteriegehäuseaufnahmen 12 werden beispielsweise mittels eines Manipulationsroboters einer ersten Position eines Aufnahmebereichs einer als Rotationstisch ausgestalteten Verbindungsstation übergeben. Der Rotationstisch weist insgesamt mehrere Aufnahmebereiche auf, deren Position durch Rotation des Rotationstisches veränderbar ist.

Mittels des Rotationstisches können die Batteriegehäuseaufnahmen und die Rahmen stoffschlüssig miteinander verbunden werden. Hierzu kann ein weiterer Manipulationsroboter die mit zumindest einer Klebenaht 18 versehenen Rahmen 14 passgenau auf den Batteriegehäuseaufnahmen 12 in einer zweiten Position der Aufnahmebereiche anordnen.

In einer nächsten Position der Aufnahmebereiche ist eine Vergussstation 30 angeordnet, die die bereits mit den Rahmen 14 verbundenen Batteriegehäuseaufnahmen 12 mit einem Schaumvergussmaterial 32 vergießt.

In den weiteren Positionen des Rotationstisches werden die mit den Rahmen 14 verbundenen Batteriegehäuseaufnahmen 12 nicht weiterbearbeitet, so dass der Klebstoff 18 und/oder das Schaummaterial 32 aushärten kann.

In einer Endposition werden die mit den Rahmen 14 verbundenen Batteriegehäuseteile 12 von einem weiteren Manipulationsroboter entnommen und einem Zwischenspeicher zur Lagerung der mit den Rahmen 14 verbundenen Batteriegehäuseaufnahmen 12 zugeführt. Der Zwischenspeicher ist insbesondere auf einen Temperaturbereich zwischen 27,5°C und 32,5 °C temperiert.

In den Aufnahmebereichen sind vorzugsweise Verbindungsstationsklimaelemente angeordnet, die die Aufnahmebereiche im Betrieb der Fertigungslinie auf den Prozesstemperaturbereich, insbesondere auf einen Temperaturbereich zwischen 40°C und 50°C temperieren.

Die Fertigungslinie 2 umfasst ferner eine Klebe- und Schaumstation, welche die von einem Zwischenspeicher zur Verfügung gestellten und mit einem Rahmen 14 verbundenen Batteriegehäuseaufnahmen 12 mit Klebstoff 40 und Schaummaterial 42 versieht. Hierzu umfasst die Klebe- und Schaumstation beispielsweise ein Förderband sowie eine Klebeeinrichtung 46 zum Aufbringen des Klebstoffs 40 sowie eine Schaumeinrichtung 48 zur Aufbringung des Schaummaterials 42. Vorzugsweise weist die Klebe- und Schaumstation zumindest ein Klimaelement auf, mittels welchem in der Klebe- und Schaumstation der Prozesstemperaturbereich vorgesehen werden kann. Zudem ist bevorzugt, dass die Klebe- und Schaumstation den Klebstoff 40 und/oder das Schaummaterial 42 vor dem Aufbringen auf eine Temperatur zwischen 25°C und 50°C, besonders bevorzugt zwischen 27,5°C und 35°C, temperiert.

Mittels eines weiteren Förderbands werden die mit Klebstoff 40 und Schaummaterial 42 versehenen Batteriegehäuseaufnahmen 12 über eine Förderstrecke zumindest einer Fügestation 54 zugeführt.

Zudem ist eine Speichereinheit 56 für die Lagerung von mit den Batteriegehäuseaufnahmen 12 zu verbindenden Bodenplatten 58 vorgesehen. Auch diese Speichereinheit 56 weist vorzugsweise Klimaelemente zur Temperierung der Speichereinheit 56 auf den Prozesstemperaturbereich auf. Mittels eines Manipulationsroboters und mittels einer Förderstrecke können die Bodenplatten 58 zur Verbindung mit den Batteriegehäuseaufnahmen 12 der Fügestation 54 zugeführt werden. Nach dem Fügen von Batteriegehäuseaufnahmen 12 und Bodenplatten 58 werden die Batteriegehäuseteile 4, insbesondere die Batteriewannen, entnommen und mittels eines weiteren Manipulationsroboters einem Endspeicher 62 zugeführt, wobei der Endspeicher 62 vorzugsweise auf den Prozesstemperaturbereich temperiert ist.

Die Fertigungslinie 2 ist vollständig von einem Gehäuse 65 umschlossen. Vorzugsweise ist der Innenraum des Gehäuses 65 mittels zumindest eines Klimamittels auf den Prozesstemperaturbereich, insbesondere auf einen Temperaturbereich von 25°C bis 35°C, temperiert.

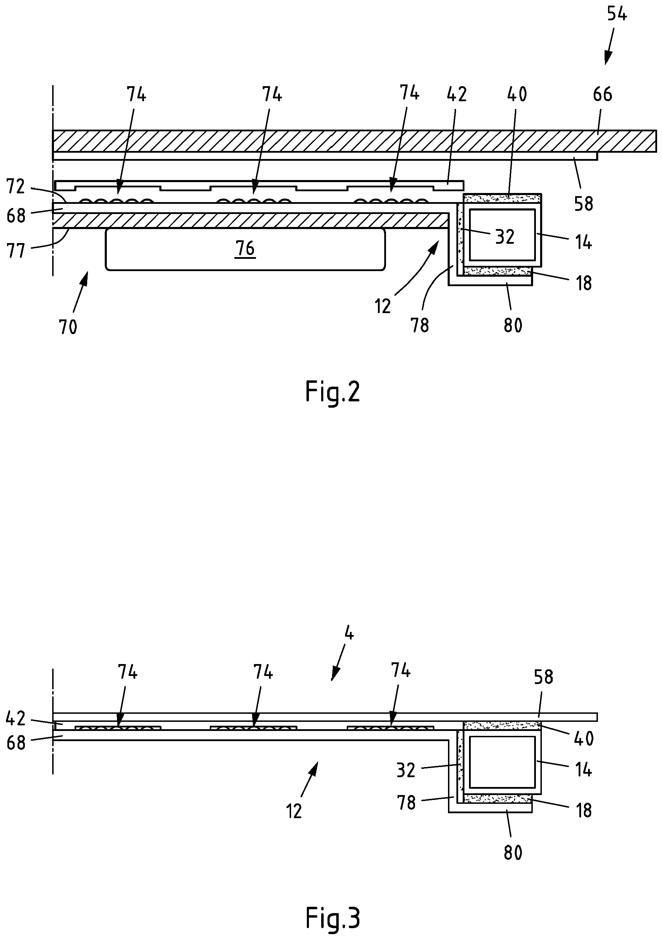

Fig. 3 zeigt eine schematische Ansicht eines Ausführungsbeispiels einer Fügestation 54 einer Fertigungslinie 2 sowie eines in der Fügestation 54 angeordneten Ausführungsbeispiels eines Batteriegehäuseteils 4.

In der Fügestation 54 werden die Bodenplatten 58 mittels einer ersten vorzugsweise bewegbaren oberen Werkzeughälfte 66 zur Verfügung gestellt. Ebenfalls werden Batteriegehäuseaufnahmen 12 zur Verfügung gestellt.

Die Batteriegehäuseaufnahmen 12 weisen im Wesentlichen horizontal erstreckende, plattenförmige Bodenabschnitte 68 auf, welche an den von den Aufnahmeräumen 70 für die Batteriemodule und/oder Batteriezellen weg zeigenden Oberflächen 72 eine Mehrzahl an geschlossenen (Kühl-)Kanälen 74 aufweist.

Während des Fügens wird die Batteriegehäuseaufnahme 12 vorzugsweise mittels wenigstens eines Druckkissens 76 oder einer Mehrzahl an Druckkissen 76 an die Bodenplatte 58 gedrückt. Dabei übt das wenigstens eine Druckkissen 76 den Druck auf die Batteriegehäuseaufnahme 12 nicht unmittelbar, sondern mittels einer Andrückeinheit 77 bzw. einer zweiten Werkzeughälfte aus. Das wenigstens eine Druckkissen bzw. der wenigstens eine Gewebeschlauch 76 ist mit einem Druck bzw. mit Luft beaufschlagbar, wobei der Druck indikativ für die von dem wenigstens einen Druckkissen 76 ausgeübte Andrückkraft bzw. den Andrückdruck ist. Die Höhe des Drucks zur Beaufschlagung des wenigstens einen Druckkissens 76 ist regelbar und/oder steuerbar und kann während des Fügeschritts aufrechterhalten oder angepasst werden. Vorzugsweise ist die Druckluft temperiert, so dass durch das wenigstens eine Druckkissen 76 eine Temperierung während des Fügeschritts ermöglicht werden kann. Die Verwendung von zumindest einem als Gewebeschlauch ausgestalteten Druckkissen 76 hat sich in der Praxis hinsichtlich einer ausreichenden Erwärmung sowie einer gewünschten Kraftverteilung als vorteilhaft erwiesen.

Vor dem Fügeschritt der Batteriegehäuseaufnahme 12 und der Bodenplatte 58 wird zwischen die Bodenplatte 58 und die Batteriegehäuseaufnahme 12 das Schaummaterial 42 eingebracht, welches insbesondere dazu dient, die mechanischen Eigenschaften des Batteriegehäuseteils 4 zu verbessern und die Verbindung zwischen Bodenplatte 58 und Batteriegehäuseaufnahme 12 zu verbessern.

Das Batteriegehäuseteil 4 weist einen die Batteriegehäuseaufnahme 12 zumindest teilweise umfassenden Rahmen 14 auf. Der Rahmen 14 wird - wie zuvor in Bezug auf die Fertigungslinie 2 bereits beschrieben - zunächst mit der Batteriegehäuseaufnahme 12 verbunden. Hierzu weist die Batteriegehäuseaufnahme 12 sich an den plattenförmigen Bodenabschnitt 68 anschließende Seitenwände 78 sowie sich an die Seitenwände 78 anschließende Befestigungsabschnitte 80 auf. Die plattenförmigen Seitenwände78 sind beispielsweise mittels des Schaumvergussmaterials 32 mit dem Rahmen 14 versiegelt und/oder verbunden.

Auch die Befestigungsabschnitte 80 sind an ihren zu dem Rahmen 14 zeigenden Oberflächen beispielweise mittels der Klebenaht 18 mit dem Rahmen 14 verklebt. Ebenfalls kann auf der einen Seitenfläche des Rahmens 14 Klebstoff 40 angeordnet sein, wobei der Rahmen 14 mittels des Klebstoffs 40 mit der Bodenplatte 58 verklebt werden kann.

Fig. 4 zeigt eine schematische Ansicht des mittels der Fertigungslinie 2 hergestellten Ausführungsbeispiels des Batteriegehäuseteils 4.

Die in dieser Spezifikation beschriebenen beispielhaften Ausführungsformen/Ausführungsbeispiele der vorliegenden Erfindung sollen sowohl einzeln als auch in allen Kombinationen miteinander offenbart verstanden werden. Insbesondere soll auch die Beschreibung eines von einer Ausführungsform umfassten Merkmals - sofern nicht explizit gegenteilig erklärt - vorliegend nicht so verstanden werden, dass das Merkmal für die Funktion des Ausführungsbeispiels unerlässlich oder wesentlich ist. Die Abfolge der in dieser Spezifikation geschilderten Verfahrensschritte ist nicht zwingend, alternative Abfolgen der Verfahrensschritte sind denkbar. Die Verfahrensschritte können auf verschiedene Art und Weise implementiert werden, so ist eine Implementierung in Software (durch Programmanweisungen), Hardware oder eine Kombination von beidem zur Implementierung der Verfahrensschritte denkbar.

In den Patentansprüchen verwendete Begriffe wie "umfassen", "aufweisen", "beinhalten", "enthalten" und dergleichen schließen weitere Elemente oder Schritte nicht aus. Unter die Formulierung "zumindest teilweise" fallen sowohl der Fall "teilweise" als auch der Fall "vollständig". Die Formulierung "und/oder" soll dahingehend verstanden werden, dass sowohl die Alternative als auch die Kombination offenbart sein soll, also "A und/oder B" bedeutet "(A) oder (B) oder (A und B)". Eine Mehrzahl von Einheiten, Personen oder dergleichen bedeutet im Zusammenhang dieser Spezifikation mehrere Einheiten, Personen oder dergleichen. Die Verwendung des unbestimmten Artikels schließt eine Mehrzahl nicht aus. Eine einzelne Einrichtung kann die Funktionen mehrerer in den Patentansprüchen genannten Einheiten bzw. Einrichtungen ausführen. In den Patentansprüchen angegebene Bezugszeichen sind nicht als Beschränkungen der eingesetzten Mittel und Schritte anzusehen.

### Bezugszeichenliste

- 4: Batteriegehäuseteil
- 8: Lagerbereich für Batteriegehäuseaufnahmen
- 10: Lagerbereich für Rahmen
- 12: Batteriegehäuseaufnahme
- 14: Rahmen
- 16: Klebestation
- 18: Klebenaht
- 30: Vergussstation
- 32: Schaumvergussmaterial
- 40: Klebstoff
- 42: Schaummaterial
- 46: Klebeeinrichtung
- 48: Schaumeinrichtung
- 54: Fügestation
- 56: Speichereinheit
- 58: Bodenplatte
- 62: Endspeicher
- 65: Gehäuse
- 66: obere Werkzeughälfte
- 68: Bodenabschnitt
- 70: Aufnahmeraum für Batteriemodule/Batteriezellen
- 72: Oberfläche der Batteriegehäuseaufnahme
- 74: (Kühl-) Kanäle
- 76: Druckkissen
- 77: Andrückeinheit
- 78: Seitenwand
- 80: Befestigungsabschnitt

## Patentansprüche

1. Fertigungslinie zur Herstellung von Batteriegehäuseteilen (4), insbesondere Batteriewannen, für elektrisch angetriebene Fahrzeuge, umfassend:
- zumindest eine Speicherstation (6) zur Lagerung von Batteriegehäuseaufnahmen (12) und von Rahmen (14) für das herzustellende Batteriegehäuseteil (4);
- zumindest eine Verbindungsstation (26) zur stoffschlüssigen Verbindung der Batteriegehäuseaufnahmen (12) mit den Rahmen (14) mittels eines Schaummaterials (32) und/oder eines Klebstoffs (18);
- vorzugsweise zumindest einem Zwischenspeicher (36) zur Lagerung der mit einem Rahmen (14) verbundenen Batteriegehäuseaufnahmen (12);
- zumindest eine Speichereinheit (56) zur Lagerung von Bodenplatten (58) für die herzustellenden Batteriegehäuseteile (4);
- zumindest eine Fügestation (54) zur stoffschlüssigen Verbindung von Batteriegehäuseaufnahmen (12), insbesondere von mit Rahmen (14) verbundenen Batteriegehäuseaufnahmen (14), mit Bodenplatten (58) mittels mindestens eines Schaummaterials (42) und/oder mindestens eines Klebstoffs (40); und
- zumindest ein Speicherlager (56, 62) zur Lagerung der Batteriegehäuseteile (4); **dadurch gekennzeichnet**
- **dass** die Fertigungslinie (2) ferner zumindest eine Klimaeinrichtung umfasst; und
- **dass** die zumindest eine Klimaeinrichtung Batteriegehäuseaufnahmen (12), Rahmen (14) und/oder die Bodenplatten (58), vorzugsweise in Abhängigkeit der offenen Zeit und/oder der Aushärtezeit des Schaummaterials (32, 42) und/oder des Klebstoffs (18, 40), auf einen Prozesstemperaturbereich temperieren.

2. Fertigungslinie nach Anspruch 1,
**dadurch gekennzeichnet,**
- **dass** die mindestens eine Klimaeinrichtung Batteriegehäuseaufnahmen (12), Rahmen (14) und/oder die Bodenplatten (58) innerhalb der gesamten Fertigungslinie (2) in einem Prozesstemperaturbereich zwischen 25°C und 55°C, insbesondere zwischen 27,5°C und 50°C, hält, und
- **dass** vorzugsweise die Fertigungslinie (2) zumindest teilweise von mindestens einem Gehäuse (65) eingefasst ist, wobei die Temperatur innerhalb des mindestens einen Gehäuses (65) auf den Prozesstemperaturbereich eingestellt wird.

3. Fertigungslinie nach Anspruch 1 oder 2,
**dadurch gekennzeichnet,**
- **dass** die zumindest eine Speicherstation (6), der zumindest eine Zwischenspeicher (36) und/oder das zumindest eine Speicherlager (56, 62) mittels Speicherklimaelementen auf eine Lagertemperatur in einem Bereich von 25°C bis 50°C, insbesondere in einem Bereich von 30°C bis 45°C, temperiert werden, und
- **dass** die zumindest eine Speicherstation (6), der zumindest eine Zwischenspeicher (36) und/oder das zumindest eine Speicherlager (56, 62) vorzugsweise im Wesentlichen turmförmig ausgebildet ist.

4. Fertigungslinie nach einem der Ansprüche 1 bis 3,
**dadurch gekennzeichnet,**
- **dass** die Fertigungslinie (2) ferner zumindest eine Klebestation (16) umfasst,
- **dass** die Klebestation (16) auf die von der Speicherstation (6) zur Verfügung gestellten Batteriegehäuseaufnahmen (12) und/oder die Rahmen (14) zumindest eine Klebenaht (18) aufträgt,
- **dass** die Klebestation (16) insbesondere auf den Prozesstemperaturbereich temperiert ist und
- **dass** die Klebestation (16) vorzugsweise den Klebstoff vor Auftragen der zumindest einen Klebenaht (18) temperiert, insbesondere auf eine Temperatur zwischen 25°C und 50°C, besonders bevorzugt auf eine Temperatur zwischen 27,5°C und 35°C temperiert.

5. Fertigungslinie nach einem der Ansprüche 1 bis 4,
**dadurch gekennzeichnet,**
- **dass** die zumindest eine Verbindungsstation als zumindest ein Rotationstisch (26) umfassend eine Mehrzahl an Aufnahmebereichen (24) ausgebildet ist,
- **dass** der zumindest eine Rotationstisch (26) zumindest ein Verbindungsstationsklimaelement je Aufnahmebereich (24) aufweist, und
- **dass** die Verbindungsstationsklimaelemente eine Temperatur der Aufnahmebereiche (24), der Batteriegehäuseaufnahmen (12) und/oder der Rahmen (14) auf den Prozesstemperaturbereich, insbesondere auf einen Prozesstemperaturbereich zwischen 40°C und 50°C, temperieren.

6. Fertigungslinie nach Anspruch 5,
**dadurch gekennzeichnet,**
- **dass** die Mehrzahl an Aufnahmebereichen (24) jeweils zumindest ein Ausrichtmittel, insbesondere ein Vakuumausrichtmittel, zum Ausrichten der Batteriegehäuseaufnahmen (12) aufweisen, und/oder
- **dass** die Mehrzahl an Aufnahmebereichen (24) jeweils zumindest ein Fixiermittel zum Fixieren der Batteriegehäuseaufnahmen (12) aufweisen.

7. Fertigungslinie nach einem der Ansprüche 1 bis 6,
**dadurch gekennzeichnet,**
- **dass** die Fertigungslinie (2) ferner zumindest eine Vergussstation (30) umfasst; und
- **dass** die zumindest eine Vergussstation (30) die mit einem Rahmen (14) verbundenen Batteriegehäuseteile (12) mit einem Schaummaterial (32) vergießt.

8. Fertigungslinie nach einem der Ansprüche 1 bis 7,
**dadurch gekennzeichnet,**
- **dass** die Fertigungslinie (2) ferner zumindest eine Klebe- und Schaumstation (38) umfasst,
- **dass** die Klebe- und Schaumstation (38) auf die von dem Zwischenspeicher (36) zur Verfügung gestellten mit Rahmen (14) verbunden Batteriegehäuseaufnahmen (12) Klebstoff (40) und/oder Schaummaterial (42) aufbringt, und
- **dass** die Klebe- und Schaumstation (38) auf den Prozesstemperaturbereich temperiert ist.

9. Fertigungslinie nach Anspruch 8,
**dadurch gekennzeichnet,**
- **dass** die Klebe- und Schaumstation (38) den Klebstoff (40) und/oder das Schaummaterial (42) vor dem Aufbringen auf eine Temperatur zwischen 25°C und 50°C, besonders bevorzugt zwischen 27,5°C und 35°C, temperiert.

10. Fertigungslinie nach einem der Ansprüche 1 bis 9,
**dadurch gekennzeichnet,**
- **dass** die Fügestation (54) die mit Rahmen (14) verbundenen Batteriegehäuseaufnahmen (12) und die Bodenplatten (58) mittels wenigstens eines Druckkissens (76), insbesondere mittels wenigstens eines Druckschlauchs (76), aneinanderdrückt, und
- **dass** das wenigstens eine Druckkissen (76), insbesondere der wenigstens eine Druckschlauch (76), mit temperierter Luft, insbesondere mit temperierter Druckluft, zur Einstellung des Prozesstemperaturbereichs in der Fügestation (54) beaufschlagbar oder befüllbar ist.

11. Fertigungslinie nach Anspruch 10,
**dadurch gekennzeichnet,**
- **dass** das wenigstens eine Druckkissen (76) die Batteriegehäuseaufnahmen (12) an die Bodenplatten (58) mittelbar über mindestens eine Andrückeinheit (77) andrückt.

12. Fertigungslinie nach einem der Ansprüche 10 oder 11,
**dadurch gekennzeichnet,**
- **dass** die Fügestation (54) ferner mindestens ein Sensormittel zur Messung der in der Fügestation (54) herrschenden Temperatur und mindestens ein Steuermittel zur Steuerung der Menge und/oder der Temperatur der temperierten Druckluft aufweist, und
- **dass** das mindestens eine Steuermittel die Menge und/oder die Temperatur der temperierten Luft in Abhängigkeit der von dem mindestens einen Sensormittel erfassten Temperatur steuert.

13. Verfahren zur Herstellung von Batteriegehäuseteilen (4), insbesondere Batteriewannen, für elektrisch angetriebene Fahrzeuge, umfassend folgende Schritte:
- Lagerung von Batteriegehäuseaufnahmen (12), Rahmen (14) und/oder Bodenplatten (58);
- Stoffschlüssiges Verbinden der Batteriegehäuseaufnahmen (12), der Rahmen (14) und/oder der Bodenplatten (58) mittels mindestens eines Schaummaterials (32, 42) und/oder mittels mindestens eines Klebstoffs (18, 40) untereinander,
- Temperieren der der Batteriegehäuseaufnahmen (12), der Rahmen (14) und/oder der Bodenplatten (58) und/oder Temperieren des Schaummaterials (32, 42) und/oder des Klebstoffs (18, 40) auf einen Prozesstemperaturbereich.

14. Verfahren nach Anspruch 13,
**dadurch gekennzeichnet,**
- **dass** das Tempieren auf einen Prozesstemperaturbereich im Wesentlichen während des gesamten Verfahrens durchgeführt wird, und/oder
- **dass** der Prozesstemperaturbereich vorzugsweise in einem Bereich von 25°C bis 55°C, insbesondere in einem Bereich von 27°C bis 50°C, liegt.

15. Verfahren nach Anspruch 13 oder Anspruch 14,
**dadurch gekennzeichnet,**
- **dass** das Verfahren mittels einer Fertigungslinie (2) nach einem der Ansprüche 1 bis 12 durchgeführt wird.
